# EUROPEAN PATENT APPLICATION

(11) **EP 4 683 008 A1**
(43) Date of publication of application: **21.01.2026**
(21) Application number: 24770493.5
(22) Date of filing: 26.02.2024
(51) Int. Cl.: H01M 8/0258, H01M 8/0228, H01M 8/0247, H01M 8/0273, H01M 8/10

(54) **METHOD FOR PRODUCING SEPARATOR**

(30) Priority: 14.03.2023 JP 2023039444
(71) Applicant: NOK Corporation, Minato-ku Tokyo 105-8585 (JP)
(72) Inventor: YUI, Hajime, Fujisawa-shi, Kanagawa 251-0042 (JP); WATANABE, Shigeru, Fujisawa-shi, Kanagawa 251-0042 (JP)
(74) Representative: TBK
(86) International application number: PCT/JP2024/006770
(87) International publication number: WO 2024/190381

(57) **Abstract**

A method for producing a separator according to one aspect of this disclosure is a method for producing a separator that includes a flow path of gas for causing generation of electrical energy and a bead having a top provided with a gasket, the method comprising a process of forming, in a flat plate-shaped base, first protrusions corresponding to the flow path by carrying out press molding, a process of forming a surface layer on a surface of the base in which the first protrusions are formed, a process of providing the gasket in a flat plate-shaped bead formation region in the base on which the surface layer is formed, the flat plate-shaped bead formation region being provided with the bead, and a process of forming, in a section in which the gasket is provided, a second protrusion corresponding to the bead.

## Description

### TECHNICAL FIELD

This disclosure relates to methods for producing separators.

### BACKGROUND ART

A fuel cell is known that includes a fuel cell stack in which a plurality of unit cells is stacked. Fuel cells of this type are used in various applications such as automobiles, factories, and households, for example. Furthermore, in general, each of a plurality of unit cells in a fuel cell stack comprises a metal separator provided with gas flow paths for fuel gas (for example, see Patent Document 1 and Patent Document 2).

Patent Document 3 discloses separators that each include a bead surrounding gas flow paths, the bead preventing leakage of fuel gas. Patent Document 4 discloses an elastic member disposed on the top of a bead to ensure sealing property of gas flow paths.

On the other hand, Patent Document 5 discloses, so as to maintain high conductivity of a separator in a corrosive atmosphere in a unit cell, that a surface treatment is applied to a base of the separator to provide a surface of the base with a surface layer that enhances resistance to the corrosive atmosphere.

### Related Art Document

### Patent Document

Patent Document 1: Japanese Patent Application, Laid-Open Publication No. 2007-66817
Patent Document 2: Japanese Patent Application, Laid-Open Publication No. 2008-251296
Patent Document 3: Japanese Patent Application, Laid-Open Publication No. 2020-198200
Patent Document 4: Japanese Patent Application, Laid-Open Publication No. 2021-143676
Patent Document 5: Japanese Patent Application, Laid-Open Publication No. 2022-85667

### SUMMARY OF THE INVENTION

### Problem to be Solved by the Invention

However, in a separator that has a surface provided with a surface layer and has a bead provided with a gasket such as an elastic member, there is room for improvement in quality of the surface layer and of the gasket. In view of the circumstances described above, an object of this disclosure is to improve quality of a surface layer and of a gasket.

### Means for Solving Problem

A method for producing a separator according to one aspect of this disclosure is a method for producing a separator that includes a flow path for gas for generation of electrical energy, and a bead having a top provided with a gasket, the method comprising a process of forming, in a flat plate-shaped base, first protrusions corresponding to the flow path by carrying out press molding, a process of forming a surface layer on a surface of the base in which the first protrusions are formed, a process of providing the gasket in a flat plate-shaped bead formation region in the base on which the surface layer is formed, the flat plate-shaped bead formation region being provided with the bead, and a process of forming, in a section in which the gasket is provided, a second protrusion corresponding to the bead.

### Effects of Invention

According to one aspect of this disclosure, it is possible to improve quality of a surface layer and of a gasket in a separator.

### BRIEF DESCRIPTION OF THE DRAWINGS

Fig. 1 is a plan view of an example of a schematic configuration of a fuel cell stack according to a First Embodiment of this disclosure.
Fig. 2 is a partial cross-sectional diagram schematically showing a part of a cross section obtained by cutting the fuel cell stack along a thickness direction of a unit cell.
Fig. 3 is a conceptual diagram showing an example of a process for producing a separator according to the First Embodiment.
Fig. 4 is a conceptual diagram showing an example of a process for producing a separator according to a Second Embodiment.

### MODES FOR CARRYING OUT THE INVENTION

Hereinafter, preferable embodiments according to this disclosure will be described with reference to the drawings. It is to be noted that a dimension and a scale of each of the elements shown in the drawings may differ from those of an actual element, and some elements may be shown schematically to facilitate understanding. It is to be noted that in the following explanation, the scope of this disclosure is not limited to these embodiments described below unless the following explanation includes a description that specifically limits this disclosure. The scope of this disclosure includes an equivalent scope of the embodiments described below.

### 1. First Embodiment

### Configurations of Fuel Cell Stack and Unit Cell

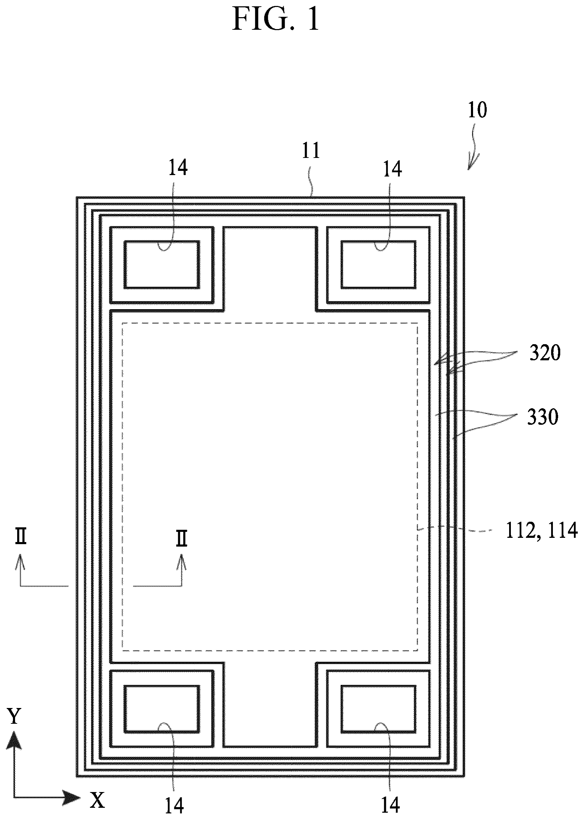

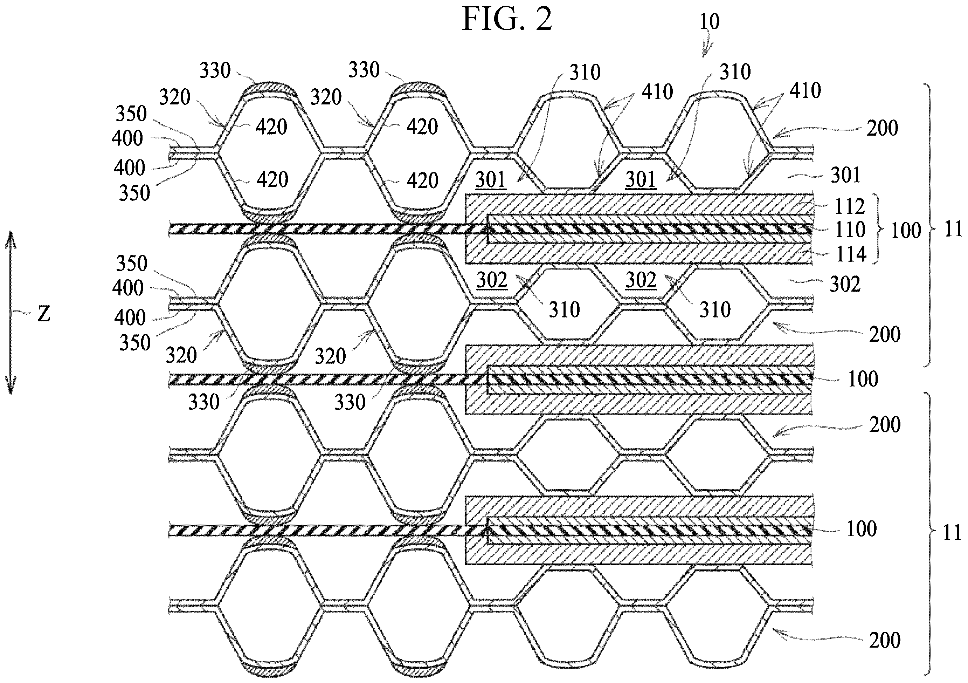

Fig. 1 is a plan view of an example of a schematic configuration of a fuel cell stack 10 according to this embodiment. In addition, Fig. 2 is a cross section taken along line II-II shown in Fig. 1. Specifically, Fig. 2 is a partial cross-sectional diagram schematically showing a part of a cross section obtained by cutting the fuel cell stack 10 along a thickness direction Z of a unit cell 11.

The fuel cell stack 10 is one of elements of a stacked polymer electrolyte fuel cell, and includes a plurality of unit cells 11 as shown in Fig. 2. Each of the plurality of unit cells 11 generates electrical energy through chemical reactions of the fuel gas. In this embodiment, the fuel gas is hydrogen, and each of the plurality of unit cells 11 converts chemical energy of the hydrogen and oxygen that is an example of an oxidizing agent gas into electrical energy through redox reactions. In the fuel cell stack 10, the plurality of unit cells 11 are electrically connected to each other, and electrical energy from the respective unit cells 11 are gathered to enhance output of the fuel cell stack 10. A fuel cell, which includes the fuel cell stack 10, is used in various applications such as automobiles, households, and business uses.

As shown in Fig. 1, in plan view, each of the plurality of unit cells 11 has a shape of a rectangular plate, and as shown inFig. 2, in the fuel cell stack 10, the plurality of unit cells 11 are stacked one on another in the thickness direction Z. Each of the plurality of unit cells 11 includes a membrane electrode assembly 100, which is referred to as a Membrane Electrode Assembly (MEA), and a pair of separators 200. The membrane electrode assembly 100 is sandwiched between the pair of separators 200 in the thickness direction Z. Thus, the pair of separators 200 is constituted of a surface of a unit cell 11.

It is to be noted that in the following description, two directions defining a plane perpendicular to the thickness direction Z of the unit cell 11 are defined as a direction X and a direction Y. The direction X and the direction Y are perpendicular to each other. In other words, the direction X, the direction Y, and the thickness direction Z correspond to coordinate axes of a three-dimensional Cartesian coordinate system.

As shown inFig. 2, the membrane electrode assembly 100 includes an electrolyte membrane 110 including a polymer membrane, an anode electrode layer 112, and a cathode electrode layer 114, for example. The membrane electrode assembly 100 is a stack structure in which the electrolyte membrane 110 is sandwiched between the anode electrode layer 112 and the cathode electrode layer 114 in the thickness direction Z. It is to be noted that, although not shown, each of the anode electrode layer 112 and the cathode electrode layer 114 is a stack structure that includes a catalyst layer, which is formed on a central region of a surface of the electrolyte membrane 110, and a gas diffusion layer, which is formed on the catalyst layer.

Each of the pair of separators 200 is a plate-shaped metal member. A separator 200 of the pair of separators 200, which faces the anode electrode layer 112 of the membrane electrode assembly 100, is provided with first flow paths 301 between which and the anode electrode layer 112 hydrogen flows. In addition, the other separator 200, which faces the cathode electrode layer 114 of the membrane electrode assembly 100, is provided with second flow paths 302 between which and the cathode electrode layer 114 oxygen flows. The hydrogen is supplied to the anode electrode layer 112 through the first flow paths 301, and the oxygen is supplied to the cathode electrode layer 114 through the second flow paths 302; thus, the membrane electrode assembly 100 generates electrical energy through redox reactions of the hydrogen. It is to be noted that, although not shown, the pair of separators 200 is also provided with flow paths for flowing coolant.

In addition, as shown in Fig. 1, the pair of separators 200 is provided with a plurality of manifold holes 14 penetrating from front to back. A manifold hole 14 is provided for each of the first flow paths 301, the second flow paths 302, and the flow paths for coolant, and hydrogen, oxygen, and coolant are supplied into the first flow paths 301, the second flow paths 302, and the flow paths for coolant, respectively, through corresponding respective manifold holes 14, and are drained from the other manifold hole 14.

### Configuration of Separator

In this embodiment, the pair of separators 200 have the same configuration. More specifically, as shown in Fig. 2, a separator 200 includes a plurality of flow paths 310, which are each used as a first flow path 301, a second flow path 302, or a flow path for coolant, at least one bead 320, and a gasket 330 provided on the bead 320.

The plurality of flow paths 310 are grooves, which each have a recessed shape (a shape of a "C") as viewed in cross section and extend parallel to one another in an X-Y plane, and the membrane electrode assembly 100 is sandwiched between the respective separators 200 with an opening of each of the grooves facing the anode electrode layer 112 or the cathode electrode layer 114 of the membrane electrode assembly 100.

In plan view of a separator 200, the bead 320 is an annular section formed to surround all of the flow paths 310, and includes a function of sealing an inner space in plan view. Specifically, as shown in Fig. 2, as viewed in cross section of the unit cell 11 along the thickness direction Z, the bead 320 comprises a protrusion protruding on a large scale in the thickness direction Z from other sections of a surface of the separator 200, and the gasket 330 is provided on the top thereof. In a stack of unit cells 11, a gasket 330 of one of the unit cells 11 is in contact with a gasket 330 of the other of the unit cells 11, and a sealing property is caused by the contact between the gaskets 330. It is to be noted that the bead 320 is also provided in a place surrounding each of the manifold holes 14.

In addition, a surface of the separator 200 is covered with a surface layer 350, and the surface layer 350 enhances resistance to a corrosive atmosphere.

The separator 200 according to this embodiment is a joined body in which two plate-shaped metal bases 400 are joined to each other. A surface of each of the two bases 400 is provided with a plurality of first protrusions 410, each having a shape of a bump as viewed in cross section and correspond to the flow paths 310, and with at least one second protrusion 420, having a shape of a bump as viewed in cross section and corresponds to the bead 320. Here, when a front surface of a base 400 is defined as a surface, which is disposed in a direction in which the first protrusions 410 and the second protrusion 420 protrude, and a rear surface of the base 400 is defined as a surface, which faces away from the front surface of the base 400, the separator 200 may be referred to as a joined body in which the rear surfaces of the two bases 400 are joined to each other, in other words, a joined body in which the two bases 400 are joined back-to-back. In this joined body, a groove formed by adjacent first protrusions 410 corresponds to a flow path 310. In addition, second protrusions 420 of the two bases 400 are aligned in the thickness direction Z and face away from each other, thereby forming the bead 320 that is substantially rectangular as viewed in cross section along both directions along the thickness direction Z. A gasket 330 is provided on the top of each bead 320. According to this bead 320, it is possible to ensure a sealing property in both directions along the thickness direction Z. In other words, it is possible to ensure both a sealing property between the membrane electrode assembly 100 and the separators 200 in each of the unit cells 11 and a sealing property between the unit cells 11.

### Method For Producing Separator

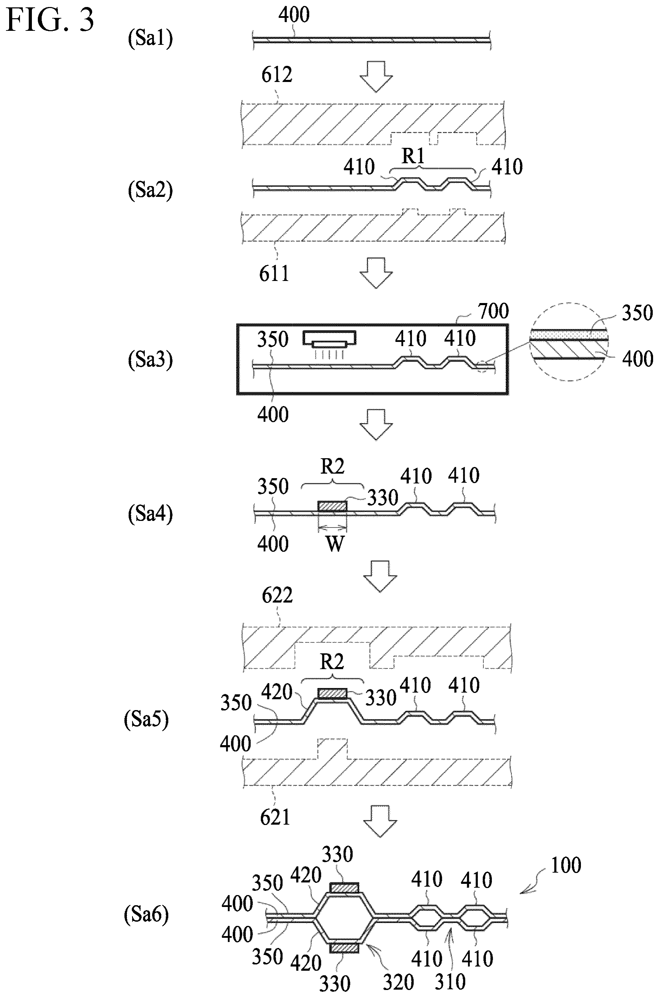

Fig. 3 is a conceptual diagram showing an example of a process for producing a separator 200. First, a base 400 is prepared (step Sa1). As long as the base 400 is a plate member containing metal as a main material, a material of the base 400 may be freely selected. Typical examples of the plate member that constitutes the base 400 include a steel plate, a stainless steel plate, an aluminum plate, a titanium steel plate, etc. In addition, a method for producing the plate member that constitutes the base 400 is not limited. It is to be noted that the manifold holes 14 described above are formed in the base 400 by appropriate processing in advance.

Then, in a flow path formation region R1 of the base 400 in which the flow paths 310 are to be provided, the plurality of first protrusions 410 is formed (step Sa2). For example, the plurality of first protrusions 410 is formed by first press molding. This first press molding is carried out by which the base 400 is sandwiched between a first male mold 611 and a first female mold 612 to apply pressing force between the first male mold 611 and the first female mold 612. The first male mold 611 includes protrusions corresponding to the first protrusions 410. The first female mold 612 includes recesses for receiving the protrusions of the first male mold 611.

Then, a surface treatment is applied to a surface of the base 400 (step Sa3). The surface treatment is a treatment by which the surface layer 350 is formed on the surface of the base 400. A method for the surface treatment may be freely selected; for example, a vapor deposition treatment or a reduction treatment disclosed in Patent Document 5 may be used. Fig. 3 shows a manner in which the base 400 is placed in a chamber 700 and the surface layer 350 is deposited by vapor deposition.

According to a production process according to this embodiment, the surface layer 350 is formed on the base 400 after the first press molding by which the first protrusions 410 that constitute the flow paths 310 are formed. Thus, compared to a case in which the surface layer 350 is formed prior to the first press molding, it is possible to prevent the first press molding from causing detachment of, or damage (for example, cracks) to, the surface layer 350, thereby maintaining high quality of the surface layer 350. As a result, it is possible to prevent deterioration of the surface layer 350 from causing a reduction in resistance to a corrosive atmosphere.

Then, prior to formation of the second protrusion 420 corresponding to the bead 320, the gasket 330 is provided in a bead formation region R2 of the base 400 in which the bead 320 is to be provided (step Sa4). As a material of the gasket 330, a rubber material such as silicone, fluorine, or ethylene propylene diene rubber (EPDM) is used. In addition, a width W and a thickness of the gasket 330 are appropriate. For example, the width W of the gasket 330 according to this embodiment is less than or equal to 5 mm, and the thickness is less than or equal to 200 µm. The gasket 330 is formed by applying a rubber material using a dispenser, for example.

In this step Sa4, the bead formation region R2 maintains a shape of a flat plate. Thus, for example, compared to a case in which the gasket 330 is provided in a surface that may include a curve or irregularities such as a top of the second protrusion 420, it is possible to form the gasket 330 with high accuracy and to maintain high quality of the gasket 330. As a result, it is possible to prevent deterioration of the gasket 330 from causing a reduction in sealing property.

Then, in a portion of the bead formation region R2 in which the gasket 330 is provided, the second protrusion 420 is formed (step Sa5). For example, the second protrusion 420 is formed by second press molding. The second press molding is carried out by which the base 400 is sandwiched between a second male mold 621 and a second female mold 622 to apply pressing force between the second male mold 621 and the second female mold 622. The second male mold 621 includes a protrusion corresponding to the second protrusion 420. The second female mold 622 includes a recess for receiving the protrusion of the second male mold 621, and a recess for receiving the first protrusions 410 formed in step Sa2.

Then, two bases 400 subjected to processes from step Sa1 to step Sa5 are joined to each other (step Sa6). Specifically, the back surfaces of the two bases 400 are joined to each other. The method for joining may be freely selected; for example, welding or the like may be used. This step Sa6 results in the plurality of flow paths 310 and a separator 200 including the bead 320 with the gasket 330. It is to be noted that a process including step Sa1 to step Sa5 is an example of a "first process" and step Sa6 is an example of a "second process."

As described above, a process for producing a separator 200 according to this embodiment includes a process (step Sa2) of forming, in a base 400 of the separator 200, first protrusions 410 corresponding to a flow path 310 by carrying out press molding, a process (step Sa3) of forming a surface layer 350 on a surface of the base 400 in which the first protrusions 410 are formed, a process (step Sa4) of providing a gasket 330 in a flat plate-shaped bead formation region R2 in the base 400 on which the surface layer 350 is formed, the flat plate-shaped bead formation region R2 being provided with a bead 320, and a process (step Sa5) of forming, in a section in which the gasket 330 is provided, a second protrusion 420 corresponding to the bead 320, and these processes are carried out in this order.

According to this production process, compared to a case in which the surface layer 350 is formed before the first protrusions 410 are formed by press molding, it is possible to prevent detachment of, or damage (for example, cracks) to, the surface layer 350 caused by formation of the first protrusions 410 by press molding, and to prevent a reduction in resistance to a corrosive atmosphere.

In addition to this, according to this embodiment, the gasket 330 is formed in the flat plate-shaped bead formation region R2 that is less curved and is less uneven. As a result, it is possible to provide the gasket 330 in a section, in which the bead 320 is to be provided, with high accuracy, and to prevent a reduction in sealing property caused by insufficient accuracy of the gasket 330.

Furthermore, the process for producing the separator 200 according to this embodiment includes a process of joining two bases 400 to each other, the two bases 400 each being provided with the first protrusions 410 and the second protrusion 420 having a top on which the gasket 330 is provided.

According to this production process, it is possible to obtain the separator 200 that includes the bead 320 that is substantially rectangular as viewed in cross section, the bead 320 protruding in both directions along the thickness direction Z, the bead 320 including tops, each of which is provided with the gasket 330. According to this separator 200, it is possible to cause the bead 320 to ensure a sealing property in both directions along the thickness direction Z. In other words, it is possible to ensure both a sealing property between the membrane electrode assembly 100 and the separators 200 in each of the unit cells 11 and a sealing property between the unit cells 11.

### 2. Second Embodiment

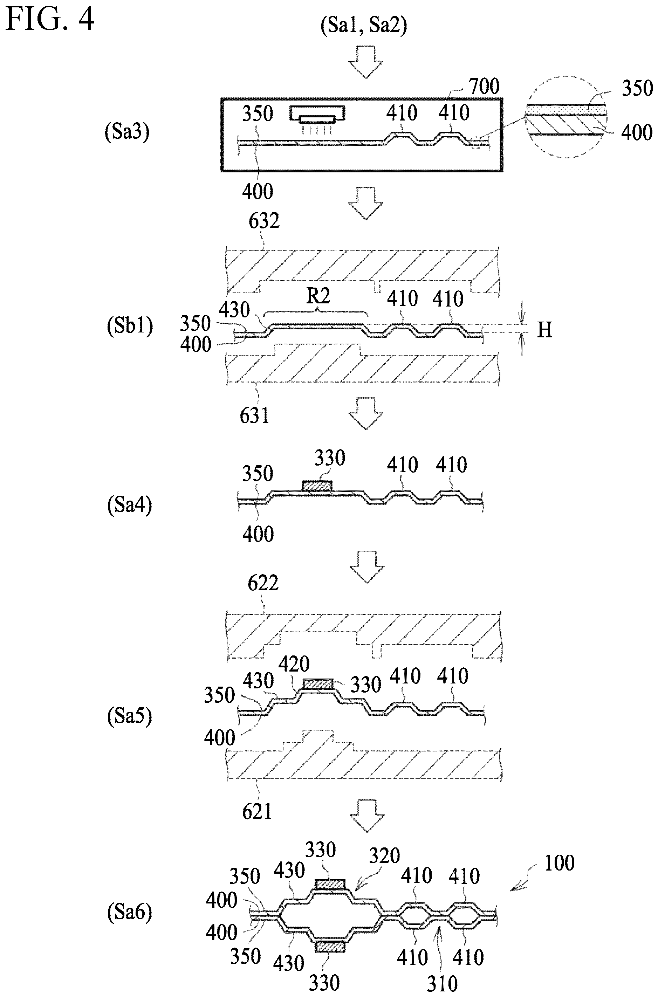

Fig. 4 is a conceptual diagram showing an example of a process for producing a separator 200 according to the First Embodiment. It is to be noted that in Fig. 4, elements explained in the First Embodiment have the same reference signs, and explanations thereof are omitted. It is to be noted that in the Second Embodiment, step Sa1 and step Sa2 are carried out as in the First Embodiment; however, in Fig. 4, step Sa1 and step Sa2 are omitted for convenience.

As shown in Fig. 4, the production process according to this embodiment includes a process (step Sb1) of forming, by third press molding, a third protrusion 430 in the bead formation region R2 after the process (step Sa3) of forming the surface layer 350 and prior to the process (step Sa4) of forming the gasket 330. The third protrusion 430 has a flat plate-shaped top and is a section that has a shape of a protrusion as viewed in cross section. Specifically, a height H of the third protrusion 430 is greater than or equal to heights of the first protrusions 410 and is less than or equal to a height of the second protrusion 420. It is to be noted that in Fig. 4, the height H of the third protrusion 430 is substantially equal to the heights of the first protrusions 410. After step Sb1 described above, the gasket 330 is formed in step Sa4.

In step Sb1, the third press molding is carried out by which the base 400 is sandwiched between a third male mold 631 and a third female mold 632 to apply pressing force between the third male mold 631 and the third female mold 632. The third male mold 631 includes a protrusion corresponding to the third protrusion 430. The third female mold 632 includes a recess for receiving the protrusion of the third male mold 631, and a recess for receiving the first protrusions 410 formed in step Sa2.

By step Sb1 being carried out, a height H of a section on which the gasket 330 is formed is greater than or equal to the heights of the first protrusions 410. Here, in a case in which screen printing, instead of the dispenser described in the First Embodiment, is used for formation of the gasket 330, the formation is carried out in a state in which a screen is pressed by a squeegee to a section, on which the gasket 330 is to be formed, and the screen is in close contact with the section, the screen having a portion provided with an opening in advance, the portion of the screen corresponding to the section that requires application of a material that is to become the gasket 330. However, if the first protrusions 410 are higher than the gasket 330, the first protrusions 410 interfere with the screen; thus, the screen cannot be in close contact with the section on which the gasket 330 is to be formed. In contrast, according to this embodiment, since the height H of the section on which the gasket 330 is to be formed is greater than or equal to the heights of the first protrusions 410, it is possible to apply screen printing to the base 400 to form the gasket 330, without interference from the first protrusions 410. Thus, it is possible to apply the material that is to become the gasket 300 in a wide range at one time by using the screen having the portion that is provided with the opening in advance and corresponds to the section that requires gasket application. As a result, it is possible to reduce takt time required to form the gasket 330.

Here, as viewed in cross section along the thickness direction Z, the bead formation region R2 has a width that sufficiently contains at least the bead 320. In addition, when a plurality of beads 320 are provided side by side, the bead formation region R2 has a width that contains all of the plurality of beads 320. In other words, the width of the bead formation region R2 is sufficiently wide compared to each of the beads 320, and a shape of the top of the third protrusion 430 formed by the third press molding maintains a flat plate shape.

In other words, even in the production process according to this embodiment, as in the First Embodiment, after the gasket 330 is provided in the flat plate-shaped bead formation region R2, the second protrusion 420 corresponding to the bead 320 is formed. Thus, it is possible to provide the gasket 330 with high accuracy and to prevent a reduction in sealing property caused by insufficient accuracy of the gasket 330.

### 3. Modifications

Specific modifications, which can be added to the First Embodiment and the Second Embodiment described above will be described below. Two or more modifications freely selected from the following modifications may be combined as long as no conflict arises from such combination.
(1) In each of the Embodiments, the separator 200 is described in which the two bases 400 are joined to each other. However, the separator 200 may be constituted of a single base 400. In this case, the first protrusions 410 correspond to the flow paths 310, and the second protrusion 420 corresponds to the bead 320.
(2) Materials and methods used for production described in each of the Embodiments can be modified as appropriate without departing from the spirit of this disclosure.
(3) In this disclosure, the description "n-th" (n is a natural number) is used only as a formal and convenient label for distinguishing elements in the description, and it has no substantive meaning. Thus, a position of each of the elements, an order of manufacture of the elements, etc., are not limited by reference to the description "n-th."

### Description of Reference Signs

10... fuel cell stack, 11... unit cell, 100... membrane electrode assembly, 200... separator, 310... flow path, 320... bead, 330... gasket, 350... surface layer, 400... base, 410... first protrusion, 420... second protrusion, 430... third protrusion, H... height, R2... bead formation region, Z... thickness direction.

## Claims

1. A method for producing a separator that includes a flow path of gas for causing generation of electrical energy, and a bead having a top provided with a gasket, the method comprising:
a process of forming, in a flat plate-shaped base, first protrusions corresponding to the flow path by carrying out press molding;
a process of forming a surface layer on a surface of the base in which the first protrusions are formed;
a process of providing the gasket in a flat plate-shaped bead formation region in the base on which the surface layer is formed, the flat plate-shaped bead formation region being provided with the bead; and
a process of forming, in a section in which the gasket is provided, a second protrusion corresponding to the bead.

2. The method for producing the separator according to claim 1, wherein the process of providing the gasket comprises:
a process of forming, by press molding, a third protrusion in the bead formation region, the third protrusion having a flat plate-shaped top and having a height less than or equal to a height of the second protrusion;
a process of providing the gasket on the flat plate-shaped top of the third protrusion; and
a process of forming, in a section on which the gasket is provided, the second protrusion corresponding to the bead.

3. The method for producing the separator according to claim 1,
wherein the process of providing the gasket comprises:
a process of forming, by press molding, a third protrusion in the bead formation region, the third protrusion having a flat plate-shaped top and having a height greater than or equal to heights of the first protrusions and less than or equal to a height of the second protrusion;
a process of providing the gasket on the flat plate-shaped top of the third protrusion; and
a process of forming, in a section on which the gasket is provided, the second protrusion corresponding to the bead.

4. A method for producing a separator, the method comprising:
a first process of forming, in each of two flat plate-shaped bases, a flow path of gas for causing generation of electrical energy, and a bead having a top on which a gasket is provided; and
a second process of joining the two bases after the completion of the first process,
wherein the first process comprises, for a base that is any one of the two bases:
a process of forming, in the base, first protrusions corresponding to the flow path by carrying out press molding;
a process of forming a surface layer on a surface of the base in which the first protrusions are formed;
a process of providing the gasket in a flat plate-shaped bead formation region in the base on which the surface layer is formed, the flat plate-shaped bead formation region being provided with the bead; and
a process of forming, in a section in which the gasket is provided, a second protrusion corresponding to the bead.
